# EUROPEAN PATENT APPLICATION

(11) **EP 4 764 401 A1**
(43) Date of publication of application: **24.06.2026**
(21) Application number: 24221100.1
(22) Date of filing: 18.12.2024
(51) Int. Cl.: G01C 15/00

(54) **COUPLING OF VCSEL ARRAY VIA MULTIMODE FIBER FOR COAXIAL ILLUMINATION IN TRACKER SYSTEM**

(71) Applicant: Trimble Inc, Westminster CO 80021 (US)
(72) Inventor: GRAESSER, Christian, Westminster, 80021 (US); FOGELQVIST, Emelie, Westminster, 80021 (US); LUND, Anders, Westminster, 80021 (US)
(74) Representative: AWA Sweden AB

(57) **Abstract**

A surveying instrument for surveying a scene including a target is provided. The surveying instrument comprises a front lens comprising an optical axis, and a multimode fiber comprising a core. The surveying instrument comprises a transmitter arrangement comprising a two dimensional array of vertical cavity surface emitting lasers (VCSELs). A first end of the multimode fiber is arranged to receive at least a portion of a light beam emitted by the transmitter arrangement for illuminating a major part of the core of the multimode fiber. A second end of the multimode fiber is arranged at the front lens for transmitting a beam coincident with the optical axis towards the scene including the target. The surveying instrument comprises a receiver configured to receive light reflected at the target via an optical path separate from the multimode fiber. The optical path includes the front lens, and the optical path coincides with the optical axis at the front lens.

## Description

### Technical field

The present disclosure relates generally to the field of surveying. In particular, the present disclosure relates to surveying instruments for surveying a scene including a target.

### Background

The art of surveying involves the determination of unknown positions, surfaces or volumes of objects using measurements of angles and distances. In order to make these measurements, a surveying instrument frequently comprises a telescope or centre unit with optical components or devices, such as an electronic distance measuring device (EDM) or a camera.

The surveying instrument typically integrates the center unit as a movable center unit (telescope) for rotation about at least two axes (typically a trunnion, or elevation, axis and an azimuth axis). The center unit is typically mounted on an alidade for rotation about a first axis (e.g., the trunnion axis) and the alidade is, in turn, typically mounted on a base for rotation about a second axis (e.g., the azimuth axis) intersecting (e.g., being orthogonal to) the first axis, such that a sighting axis of the surveying instrument is rotatable about a rotation point (typically corresponding to the intersection between the first axis and the second axis). During use, the surveying instrument is typically set up such that the first axis is oriented in the horizontal plane and the second axis is oriented in the vertical direction.

The sighting axis (or optical axis) of the total station is defined as an axis of the centre unit that is orthogonal to the first axis, i.e., the axis about which the centre unit is rotatable relative to the alidade. The sighting axis is also the axis along which a measurement is intended to be performed using the centre unit such as, for example, by means of the EDM unit.

Some surveying instruments have a tracker system for automated detection, following and accurately aiming of a target. A tracker system or unit of a surveying instrument normally focuses a light signal received from a target onto a detector. The received light signal normally comprises optical radiation propagating from the target, typically either from an active device of the target, or a reflection of an incident measuring beam, which may initially be transmitted from the surveying instrument.

The present disclosure relates to surveying instruments including a transmitter for transmitting a light beam towards the scene surveyed by the surveying instrument. There is a general need in the technical field of providing a surveying instrument for automated detection with improved range and suppressed disturbances.

### Summary

One general aim of the present disclosure is to provide a surveying instrument with improved measurements. Specifically, there is a desire to increase reliability of the aiming and thereby provide improved measurements of angles (both in vertical and horizontal directions). There is a desire to improve the range and suppress disturbances in the measurement.

This and other objects are achieved by means of a surveying instrument as defined in the appended independent claim. Other embodiments are defined by the dependent claims.

According to a first aspect of the present disclosure, a surveying instrument for surveying a scene including a target is provided. The surveying instrument comprises a front lens. The front lens comprises an optical axis. The surveying instrument further comprises a multimode fiber comprising a core. The surveying instrument further comprises a transmitter arrangement comprising a two dimensional array of vertical cavity surface emitting lasers (VCSELs). A first end of the multimode fiber is arranged to receive at least a portion of a light beam emitted by the transmitter arrangement for illuminating a major part of the core of the multimode fiber. A second end of the multimode fiber is arranged at the front lens for transmitting a beam coincident with the optical axis towards the scene including the target. The surveying instrument further comprises a receiver configured to receive light reflected at the target via an optical path separate from the multimode fiber. The optical path includes the front lens, and the optical path coincides with the optical axis at the front lens.

A surveying instrument is a piece of surveying equipment that may, for example, be used in mapping or construction projects. A surveying instrument may for example be a total station, a geodetic device, or a theodolite. Such surveying instruments may be used to determine angles and/or distances from the surveying instrument to an object towards which the surveying instrument is aimed. The surveying instrument may transmit and receive light via the front lens. The surveying instrument is configured to emit a light beam via the transmitter arrangement and the surveying instrument detects received light via the receiver. The receiver may detect light corresponding to the light beam emitted by the transmitter arrangement. The light may be in the visible or infrared spectrum.

The surveying instrument may be used for tracking a target. Tracking may be used for automatic, or manual, aiming of a surveying system towards a target. More specifically, tracking may be done by detecting a target in the field of view of a receiver of a surveying instrument, and the direction of the surveying instrument may be automatically, or manually, controlled such that the surveying instrument, or an optical axis of the surveying instrument, is aimed in the direction of the target.

The surveying instrument may be positioned so as to survey a scene. Surveying a scene may comprise emitting a beam towards the scene and receiving light reflected at an object of the scene. The surveying instrument may be aimed towards a point or object of interest of the scene. In other words, the surveying instrument may be positioned such that an optical axis of the surveying instrument intersects the point or object of interest. The point or object of interest may be referred to as a target. The surveying instrument may be configured to illuminate passive targets such as corner-cube prisms and reflective tape, i.e. targets adapted to reflect light emitted from the surveying instrument.

The surveying instrument comprises a transmitter arrangement configured to emit a light beam towards the scene through the front lens. The transmitter arrangement comprises a two dimensional array of VCSELs. The two dimensional array of VCSELs may herein be referred to as a VCSEL array. The VCSELs in the VCSEL array may be arranged in any suitable manner, such as, for example, in a grid pattern. The VCSELs in a VCSEL array may be arranged so as to form a, preferably equidistant, grid, which may be significantly rectangular, square, or circular. The VCSELs in the VCSEL array may be arranged to emit light substantially in one direction, thereby forming a light beam. The VCSELs in the VCSEL array are preferably arranged so as to give a substantially homogeneous illumination of the resulting light beam.

As compared to LED light sources, which could, similarly to VCSELs, be coupled to the multimode fiber, VCSELs have a narrower emission spectrum, or a smaller spectral emission bandwidth. An LED light source may have a spectral emission bandwidth larger than 20 nm, or larger than 30 nm. VCSELs may have a spectral emission bandwidth smaller than 5 nm, or even smaller than 1 nm. A smaller spectral emission bandwidth may allow for a narrower receiver bandpass, which may lead to less disturbance from ambient light. Less disturbance from ambient light may allow measurements to be performed at longer distances from the surveying instrument.

As compared to conventional edge-emitting lasers, VCSEL arrays may have a significantly reduced spectral drift in temperature. A reduced spectral drift is advantageous since it may allow for disturbances in the measurement to be suppressed. For example, in the case of a transmitter having a larger spectral drift, the bandpass filter in front of the receiver may need to accommodate for this drift with some margins to detect light reflected at the target, which may allow for broad-spectrum light to also be detected at the receiver. Broad-spectrum light entering the receiver acts as a disturbance and it may therefore be advantageous to decrease the amount of light received by the receiver that is not reflected by the target. A smaller spectral drift at the transmitter may allow for the use of a narrower bandpass filter at the receiver and thus provide an improved background suppression.

Further, VCSEL arrays may have a higher output power. An increased amount of VCSELs in an array may increase the amount of power that is output by the array. A VCSEL array may, due to the multiple emission points, provide the benefit of an extended source instead of a point source, which may allow for an emission of higher power without exceeding laser class limits. A higher allowed output power may result in improved measurement results and/or for measurements to be conducted over longer distances.

Another advantage of a VCSEL array compared to conventional laser diodes is that the transmitted light may be semi-coherent. A semi-coherent light may result in a smoother illumination profile, less sensitivity towards objects that obstruct the beam path, and/or a reduced speckle effect. A reduced speckle effect may result in a less angular and interference dependent signal, with fewer amplitude variations. A VCSEL beam may have a circular shape, which may provide advantages over other beam shapes, such as, for example, higher coupling efficiency when coupling into an optical fiber. The coupling efficiency may refer to the effectiveness of light transfer at the interfaces of an optical fiber. It may encompass how well light from a source is introduced into the fiber and how efficiently light emerging from the fiber is delivered to a receiver. Coupling efficiency may relate to the efficiency of the system.

VCSELs may be manufactured on large wafers which may allow for continuous testing of the wafer during production, which may lead to high yield, repeatability and lower costs compared to other light sources.

The surveying instrument further comssprises a multimode fiber, which may simply be referred to as a fiber. The multimode fiber may allow for propagation of multiple light modes. The multimode fiber comprises a core. The multimode fiber may comprise a coating that surrounds the core in the radial direction. The multimode fiber may comprise a cladding between the core and the coating. The multimode fiber may blend incoming rays such that the output rays are homogeneously distributed over the core and the emission angles.

The multimode fiber is optically positioned along an optical path between the transmitter arrangement and a scene. More specifically, the multimode fiber is positioned so that it may emit a light beam originating from the transmitter arrangement towards a scene including a target, wherein the scene is external to the surveying instrument. The multimode fiber comprises a first end and a second end. The light received at the first end of the multimode fiber propagates along the fiber to the second end.

The first end of the multimode fiber is arranged to receive at least a portion of a light beam emitted by the transmitter arrangement, i.e., the VCSEL array. The first end of the multimode fiber may receive only a portion of the light beam emitted by the transmitter arrangement if, for example, the VCSEL array is larger than, and/or not concentric to, the multimode fiber. The first end of the multimode fiber and the transmitter arrangement are preferably positioned so as to increase the coupling efficiency between the fiber and the transmitter arrangement. The first end of the multimode fiber may advantageously be positioned close to the VCSEL array. The term close to may mean that it lies within a range of for example 0.1 mm to 1 mm.

The second end of the multimode fiber is arranged at the front lens for transmitting a beam towards a scene including a target. In particular, the second end of the multimode fiber is arranged for transmitting a beam coincident with the optical axis of the front lens. The transmitted beam being coincident with the optical axis at the front lens may alternatively be referred to as the transmitted beam being coaxial, collinear and/or concentric with the optical axis at the front lens. Having the transmitted beam coaxial, collinear and/or concentric to the optical axis at the front lens may comprise having a centre, or a centroid, of the cross-section of the transmitted beam collinear and/or concentric to the optical axis of the front lens.

The first and/or the second end of the multimode fiber may be arranged with a strain relief. A strain relief may reduce mechanical stress, such as tension, bending, or twisting, at the point where the multimode fiber connects to other components of the surveying instrument, such as the front lens, the transmitter arrangement, or a holder. The strain relief may preferably be configured to minimize optical interference, such as by having a reduced length in the optical direction. The strain relief may have a diameter that is larger than the diameter of the multimode fiber. The strain relief may have a diameter of 0.8 mm to 1 mm, for example 0.9 mm.

The multimode fiber may have an outer diameter of less than 1 mm, or preferably less than 0.5 mm. The multimode fiber may for example have an outer diameter of 0.25 mm. The multimode fiber may potentially block light from reaching the receiver. The multimode fiber may preferably be arranged so as to reduce, or minimize, the shadow, or the blockage, on the receiver, for example by bending away the multimode fiber from the optical path of the received light beam. The beam of light from the scene that passes through the front lens, and travels towards the reciever, may be conical due to refraction at the front lens. The multimode fiber may be bent where the area of the light beam, e.g. the cone area, is larger, preferably much larger, than the fiber area. The bending of the multimode fiber may occur in the first 50%, or first 75%, of the distance between the front lens and the receiver, measured from the front lens. The second end of the multimode fiber may therefore preferably be arranged close to the front lens. Arranging the second end of the multimode fiber close to the front lens may reduce the obstruction in the optical path of the receiver caused by the multimode fiber. Less obstruction of the optical path of the receiver may increase the amount of light received by the receiver, which in turn reduces blind spots and improves the accuracy of the measurements.

As compared to a single mode fiber, the multimode fiber core diameter may be larger, e.g. 10 times larger, thereby providing a larger emission area filled with light rays. If, for example, the user would get the ray in a sensitive area, such as the eye, a larger emission area may result in reduced damage of the inflicted area. For approximately the same number of rays per area, a multimode fiber may allow for more power emitted in total towards the scene, as compared to a single mode fiber. A beam with a higher power output may allow for illumination of a target at a longer range and/or illumination of a larger area.

For example, a single mode fiber may have a high density of rays per fiber area to reach illumination demands, and may therefore need to be defocused by an optical element to cover illumination of the full scene. The illumination of the scene from a multimode fiber with larger emission area may be achieved by the large emission area and/or by a slight defocusing, which may be achieved by an optical element.

A multimodal fiber may provide a more homogeneous illumination on a surface, and/or a higher resistance towards disturbance. A reduced sensitivity, or a higher resistance towards disturbances, may be due to a reduced coherence, as the light emitted by the transmitter arrangement may be mixed when guided through the multimode fiber. A reduced coherence may lead to a reduction in speckle, which may lead to a reduced amount of amplitude noise of the light reflected by the target and received by the receiver. Amplitude noise may refer to unwanted fluctuations in the brightness or power of a light beam, which may, for example, affect the precision of measurements. Increased homogeneity in the illumination and/or higher resistance towards disturbance may increase the stability of, or decrease interference with, measurements. For example, a more homogeneous illumination or a higher resistance towards disturbance may allow an external object, such as a target, to be more stably illuminated when moving across the field of view of the surveying instrument, which may lead to a reduced risk of losing lock when tracking a target or in target finding applications.

The transmitter arrangement is configured to illuminate a major part of the core of the multimode fiber. More specifically, the VCSEL array is configured to illuminate a major part of the core of the multimode fiber by illuminating the first end of the multimode fiber. The transmitter arrangement may illuminate less than the entire core of the multimode fiber if, for example, the VCSEL array is smaller than, and/or not concentric to, the multimode fiber.

A major part of the core of the multimode fiber comprises at least 50% of the core. Preferably, at least 75% of the core is illuminated, and most preferably the entire fiber core is illuminated. Further, the VCSEL array and the multimode fiber core are preferably concentrically aligned. Concentrically aligning the VCSEL array and the multimode fiber core may allow for an increased portion of the multimode fiber core to be illuminated.

The multimode fiber may blend rays from the transmitter arrangement, obtained at the first end of the fiber, such that the rays of the transmitted beam, transmitted from the second end of the fiber, are homogeneously distributed over the core and the emission angles. The divergence of the transmitted beam may preferably match the divergence of the receiver. More specifically, the second end of the multimode fiber may be arranged such that the transmitted beam, originating from the transmitter arrangement of a surveying instrument, has a divergence, or an angular range, that covers at least the field of view of the receiver.

As mentioned above, the surveying instrument may detect light coming from an object (or target) of the scene via the receiver. More specifically, the receiver is configured to receive light emitted by the surveying instrument and reflected at the target. The receiver is configured to receive light via an optical path separate from the multimode fiber. In other words, the center unit of the surveying instrument includes a transmitting optical path comprising the multimode fiber for transmission of an optical beam and a receiving optical path, which does not include the multimode fiber, for receiving light coming from the scene.

The optical path of the receiver includes the front lens. The optical path of the receiver may include other optical elements. The optical path of the receiver coincides with the optical axis of the front lens at the front lens. In other words, the optical path of the receiver coinciding with the front lens at the front lens may comprise that the optical path of the received beam is coaxial, collinear and/or concentric with the optical axis at the front lens. Having the optical path coaxial, collinear and/or concentric to the optical axis at the front lens may comprise having a centre, or a centroid, of the cross-section of the received beam collinear and/or concentric to the optical axis at the front lens.

According to some embodiments, the VCSEL array comprises at least ten VCSELs, or preferably at least fifty VCSELs.

A larger amount of VCSELs may increase the total amount of power of the beam transmitted by the surveying instrument, which may lead to an increased measurement range of the surveying instrument, i.e., the surveying instrument may be able to measure targets further away from the surveying instrument. A higher total amount of light power may improve the measurement by, for example, increasing the signal to noise ratio. An increased amount of VCSELs in the VCSEL array may lead to an increase in homogeneity of the resulting illumination, which may, for example, increase the robustness of the measurements.

The VCSEL array is configured to illuminate a major part of the core of the multimode fiber. A higher amount of VCSELs may mean a larger VCSEL array. A larger VCSEL array may illuminate a larger part of the core of the multimode fiber. A VCSEL array larger than the cross-sectional area of the multimode fiber core may illuminate the entire multimode fiber core. Since the multimode fiber may blend the incoming rays, it may be more energy efficient to illuminate only a portion of the core of the multimode fiber. A VCSEL array smaller than the cross-sectional area of the multimode fiber core may be more energy efficient.

Increasing the size of the VCSEL array may decrease the required accuracy when aligning the VCSEL array and the fiber core. Increasing the size of the VCSEL array may increase the robustness of the surveying instrument, since it may be less sensitive to positional and temperature deviations of the transmitter arrangement.

According to some embodiments, the multimode fiber is detachably arranged at the VCSEL array, or the multimode fiber is detachably arranged at the front lens.

More specifically, the first end of the multimode fiber may be detachably arranged to the VCSEL array, and/or the second end of the multimode fiber may be detachably arranged at the front lens. A detachably arranged multimode fiber may comprise that the multimode fiber is arranged in a way that allows for it to be removed from, or reattached to, its position without causing damage to the surveying instrument, or any components thereof. A detachably arranged multimode fiber may allow for reduced complexity and/or cost during manufacture, and allow for improved serviceability and assembly. A detachably arranged multimode fiber may allow for a multimode fiber of the surveying instrument to be replaced.

In other words, the VCSEL array may be detachably arranged to the multimode fiber, or, more specifically, the VCSEL array may be detachably arranged to the first end of the multimode fiber. A detachably arranged VCSEL array may comprise that the VCSEL array is arranged in a way that allows for it to be removed from or reattached to its position without causing damage to the surveying instrument, or any components thereof. Put another way, a detachably arranged VCSEL array may allow for "plug-and-play" coupling. A detachably arranged VCSEL array may reduce complexity and/or cost during manufacture. A detachably arranged VCSEL array may allow a VCSEL array of the surveying instrument to be replaced with another VCSEL array if, for example, the first VCSEL array is not functioning properly. Having a detachably arranged multimode fiber or VCSEL array may contribute to several advantages, such as reduced complexity, time and/or cost during repair, and a longer lifetime of the surveying instrument.

According to some embodiments, the second end of the multimode fiber is arranged at a first side or a second side of the front lens. The first side and the second side of the front lens are arranged along the optical axis, and the first side is arranged prior to the second side along the propagation direction of the transmitted beam.

In other words, the first side of the front lens may be described as the internal side of the front lens, wherein the internal side of the lens is the side of the lens that faces the inside of the center unit of the surveying instrument. The second side of the front lens may be described as the external side of the front lens, wherein the external side of the lens is the side of the lens that faces the outside of the surveying instrument.

Arranging the second end of the multimode fiber at a first side of the front lens may allow the second end of the multimode fiber to be protected by the front lens. The front lens may protect the second end of the multimode fiber from elements outside of the surveying instrument. The second end of the multimode fiber being positioned on the first side of the front lens may contribute to reduced complexity during manufacture, as compared to arranging the second end of the multimode fiber on the second side of the front lens.

Arranging the second end of the multimode fiber at a second side of the front lens may allow the transmitted beam to have an optical path not optically affected by the front lens. If the transmitted beam is transmitted via the front lens, the front lens may alter the optical properties of the transmitted beam. For example, if the transmitted beam travels through the front lens, the front lens may refract the transmitted beam. The second end of the multimode fiber may be arranged at the second side of the front lens by having the second end of the multimode fiber extend around or through the front lens. Having the second end of the multimode fiber extend through the front lens may decrease the risk of positional dislocation between the multimode fiber and the lens.

According to some embodiments, the second end of the multimode fiber is attached to the front lens, the second end of the multimode fiber abuts the front lens, or the second end of the multimode fiber is held in proximity to the front lens.

For example, the second end of the multimode fiber may be attached to the front lens directly or via a holder. The second end of the multimode fiber, or the holder, may be attached to the front lens with glue, tape or another suitable material. Attaching the second end of the multimode fiber to the front lens may improve stability, preventing the second end of the multimode fiber from being displaced, thereby increasing reliability of the measurements. Having the second end of the multimode fiber arranged through the front lens and attached to the front lens via the sides of the multimode fiber may allow for a more reliable positioning of the second end of the multimode fiber, as compared to other methods of attachment.

The second end of the multimode fiber may be attached to the front lens while abutting the front lens, thereby reducing or minimizing the obstruction in the optical path of the receiver caused by the second end of the multimode fiber. Abutting the second end of the multimode fiber against the front lens may also reduce the risk of light emitted by the second end of the multimode fiber becoming stray light within the surveying instrument.

Stray lights may disturb, or interfere with, measurements, i.e. by impinging on the receiver. Reducing the amount of stray lights within the surveying instrument may improve the accuracy of the measurements. When making a measurement, the interfering effect of stray lights may be reduced by using a threshold, e.g. placed on the intensity of the light getting measured, and/or a limited exposure time. Reducing the amount of stray lights may improve the range of the surveying instrument, since it may allow for a lower threshold and/or a longer exposure time.

The second end of the multimode fiber may be held in proximity to the front lens via a holder. The holder may be attached to the front lens, or separate from the front lens. Holding the second end of the multimode fiber in proximity to the front lens may facilitate precise alignment and reduce strain on the multimode fiber or the front lens, as compared to other modes of arranging the second end of the multimode fiber.

The second end of the multimode fiber may be held in proximity to the front lens, while being arranged so as to transmit a light beam towards an optical element, such as a mirror, of the surveying instrument. A mirror may be positioned to reflect a light beam, propagating from the second end of the multimode fiber, out of the surveying instrument, so that the transmitted beam is coincident with the optical axis at the front lens. The mirror may be positioned so as to direct the light 90 degrees. Having the mirror direct the light at an angle may allow the multimode fiber, or more specifically the second end of the multimode fiber, to be positioned so as to reduce, or minimize, the obstruction in, or not obstructing at all, the optical path of the receiver.

According to some embodiments, the surveying instrument comprises a second optical element, wherein the second end of the multimode fiber is arranged for transmitting the beam through the second optical element.

Transmitting the beam through the second optical element may alter the optical properties of the transmitted beam. The second optical element may alter, for example, the divergence of the transmitted beam. The optical properties of the beam may improve measurement results by, for example, being arranged to match the receiver. The second optical element may cause the emission angles of the transmitted beam to match the reception angle of the receiver.

The second optical element may be mounted in a holder arranged to hold the second end of the multimode fiber. The second optical element may be arranged on the first or the second side of the front lens. The second end of the multimode fiber may be arranged to transmit the beam along an optical path that intersects both the second optical element and the front lens, or an optical path that intersects the second optical element, while being separate from the front lens.

The second end of the multimode fiber may be attached and/or coupled to the front lens via a second optical element. The second optical element may alter the optical characteristics of the transmitted beam, such as, for example, the divergence. Coupling the second end of the multimode fiber to the front lens via the second optical element may allow the second end of the multimode fiber to be substantially held in position relative to the front lens. Coupling the second end of the multimode fiber to the front lens via the second optical element may decrease manufacturing costs since it may allow for the second end of the multimode fiber to be substantially held in place at the same time as it may provide a solution for altering the optical characteristics of the transmitted beam.

According to some embodiments, the second optical element is a GRIN lens, a spherical lens, a microlens, or a mirror.

The use of GRIN lenses, spherical lenses and microlenses may be a relatively cost efficient alternative over other lenses.

A GRIN lens, otherwise referred to as a gradient index lens, may have a nonuniform refractive index so as to allow incident light to bend in a controlled matter. A GRIN lens may have a flat surface configured to receive or emit light, which may simplify the mounting process. The length of the GRIN lens may be adapted in order to adapt the divergence of the transmitted beam to match the divergence of the receiver.

The use of a mirror may alter the direction of light. By redirecting light, a mirror may assist in obtaining a more compact design in optical systems. A mirror may allow for reduced obstruction in beam paths by redirecting light from other system components.

According to some embodiments, the divergence of the transmitted beam is adapted for covering at least a major part of the field of view of the receiver.

The divergence of the transmitted beam may be adapted via the components of the surveying instrument. More specifically, the divergence of the transmitted beam may be adapted by adapting at least one of the numerical aperture of the multimode fiber, the area of the multimode fiber core, or an optical element, such as a lens, in the optical path of the transmitted beam. A lens in the optical path of the transmitted beam may be at least one of the front lens or an optical element, such as the second optical element described above. The divergence of the transmitted beam may be adapted by adapting the shape of the cross-section of the core of the multimode fiber. The shape of the cross-section of the core of the multimode fiber may correspond to a shape of a surface of the receiver.

Put another way, the properties of the fiber and/or one or more lenses positioned at the second end of the multimode fiber may be selected for adapting the divergence of the transmitted beam. The properties of the fiber and/or one or more lenses positioned at the second end of the multimode fiber may be selected so that the transmitted beam covers at least a major part of the field of view of the receiver. At least a major part comprises a percentual portion of at least 50%. The divergence of the transmitted beam may be adapted for covering at least a major part of the field of view of the receiver to improve the accuracy and/or reliability of the measurement. Matching the divergence of the transmitted beam with the field of view of the receiver may allow a target in the scene, or more specifically a target that is within the field of view of the receiver, to be located even in cases where the optical axis of the surveying instrument is not oriented directly towards the target.

According to some embodiments, the cross-section of the core of the multimode fiber is circular, elliptical, square, or rectangular.

Adapting the shape of the core may, for example, allow for an improved coupling efficiency between the multimode fiber and the transmitter arrangement, and/or the receiver. Improved coupling efficiency may improve energy efficiency, as well as the accuracy and reliability of the measurement. The shape of the cross-section of the multimode fiber core may also be referred to as the shape of the fiber core.

Certain shapes of the multimode fiber core may allow for more uniform light distribution at a target. Rotational symmetry of the shape of the core of the multimode fiber may facilitate the alignment of the multimode fiber. For example, a circular core may facilitate alignment of the multimode fiber because no regards may be put on the rotational orientation of the multimode fiber. Put another way, a higher degree of rotational symmetry may allow the first end of the multimode fiber to be easier to align in relation to the transmitter arrangement, and the second end of the multimode fiber to be easier to align in relation to, for example, the receiver. Having a multimode fiber core shape that is elliptical, rectangular, or square may also have advantages over other shapes due to the respective rotational symmetry of the shapes. It may be advantageous to adapt the shape of the multimode fiber core to, for example, the shape of the VCSEL array or the receiver.

As mentioned above, a shape of the cross-section of the core of the multimode fiber may correspond to a shape of a surface of the receiver. The surface of the receiver may be the sensitive area of the receiver, i.e. the portion of the receiver configured for interacting with incoming light. The surface of the receiver may also be expressed as the surface at which the light is received. The shape of the cross-section of the core may correspond to a shape of a surface of the receiver by, for example, the cross-section of the core having a substantially same shape as the surface of the receiver. Even though the shape of the cross-section of the core and the surface of the receiver may be substantially similar, the sizes may be different. The receiver may be a camera. By way of example, the surface of the receiver, e.g. a sensor or a surface of a camera, may have a width/height ratio of 4/3 or 16/9.

It may be advantageous to adapt the shape of the core of the multimode fiber to the shape of the surface of the receiver to increase the efficiency of the transfer of light between the transmitter arrangement and the receiver. For example, in order to cover the surface of the receiver with a beam, a beam originating from a core of the multimode fiber having a shape that does not correspond to the shape of the receiver may cause a large area of the impinging beam to miss the surface of the receiver, and will therefore go undetected. As another example, in order to fully utilize a beam originating from a core of the multimode fiber having a shape that does not correspond to the shape of the receiver, the beam will only illuminate a portion of the surface of the receiver. By instead adapting the cross-sectional area of the core of the multimode fiber to the receiver, a substantial part of the beam originating from the surveying instrument may intersect a substantial part of the receiver, and the efficiency of the measurement may increase.

Adapting the shape of the multimode fiber core to the shape of the surface of the receiver may lead to a more efficient transfer of light between the transmitter arrangement and the receiver, which may reduce power loss, reduce the level of noise, and have increase in energy efficiency of the system.

Increasing the efficiency of the transfer of light between the transmitter arrangement and the receiver may be particularly beneficial for lasers of a certain classification that has limits, such as on the total transmitted power. The limitations of laser classification may make an efficient transmission beneficial, so that it may be beneficial that, for example, the transmitter does not transmit light outside of the field of view of the receiver. Having a portion of transmitted light outside the FoV of the receiver, and the laser class regulation limiting the total transmitted power, the power density on the receiver may be smaller than if the transmitted beam matches the angular area of the receiver FoV.

According to some embodiments, the size of the VCSEL array is adapted to the size of the cross-section of the core of the multimode fiber for illumination of the major part of the core of the multimode fiber.

The size of the VCSEL array may be adapted to the size of the cross-section of the core of the multimode fiber in order to adapt how much of the multimode fiber is to be illuminated. As stated above, a VCSEL array larger than the cross-sectional area of the multimode fiber may illuminate the entire multimode fiber core. A VCSEL array larger than the cross-sectional area of the multimode fiber may lead to a higher degree of positional and rotational freedom of alignment. A VCSEL array smaller than the fiber core may however be more energy efficient. By adapting the size of the VCSEL array to the size of the cross-section of the core, a more energy efficient transfer of light may be achieved. An increase in energy efficiency of the coupling may reduce the need for additional optics, such as lenses, between the VCSEL array and the multimode fiber.

To increase energy efficiency, the size of the different dimensions of the VCSEL array may be adapted for the size of the corresponding dimension of the cross-section of the core of the multimode fiber. The VCSEL array may have any suitable size, but it may preferably comprise a largest diagonal or a diameter of preferably at least 50 µm, more preferably at least 100 µm, or most preferably 150 µm. A largest diameter may preferably be shorter that 1 mm, or preferably shorter than 200 µm.

Preferably, the VCSEL array diameter is slightly larger than the fiber core. A VCSEL array diameter slightly larger than the fiber core may result in less spilled light, which may lead to a more efficient system than one would have had with a larger fiber core, and the lateral position of the fiber is not as critical as when the VCSEL array diameter is equal to the fiber core diameter. Having the VCSEL array slightly larger than the multimode fiber core may allow it to compensate for mechanical tolerances. A larger VCSEL array may allow for a larger amount of VCSELs contributing to the total power, thus each individual VCSEL can be operated at a lower, moderate, power. The selection of size and diameter should allow for plug and play of mounting the fiber to the VCSEL array, which may simplify production and service of the surveying system.

According to some embodiments, the receiver is a sensor of an electronic distance measurement unit, a camera, or a sensor configured to detect an angular deviation of received light reflected at the target relative to the optical axis, of the surveying instrument.

An electronic distance measurement unit may be used for measuring a distance to an object (or point of interest) based on the transmitted and detected light. A camera may receive visual light, and may therefore provide images of the scene, or objects in the scene. Images of the scene, or objects in the scene, may, for example, be used for tracking.

The receiver may be a sensor to determine an angular relation between an optical axis (of the surveying instrument) and the target, or more specifically the direction to the target as seen from the receiver, by having the transmitter arrangement illuminate a target, whereby the receiver receives/detects light retroreflected at the target. From the location where the light retroreflected at the target impinges on the sensor, an angular deviation of the target direction from the optical axis can be derived.

According to some embodiments, the VCSEL array and the first end of the multimode fiber are arranged with a shared center or axis.

The VCSEL array and the first end of the multimode fiber being arranged with a shared center or axis may comprise that a centre, or a centroid, of the VCSEL array is aligned with a center, or a centroid, of the multimode fiber as seen from a cross-section perpendicular to the axis of extension of the multimode fiber. The VCSEL array and the first end of the multimode fibre may be concentrically aligned. Aligning the VCSEL array and the multimode fiber may increase coupling efficiency. Increasing the coupling efficiency may improve signal quality, increase efficiency, and consequently improve measurement reliability.

The VCSEL array being arranged with the first end of the multimode fiber may comprise that the beam transmitted by the VCSEL array is coaxial, collinear and/or coincident with the core, or a center or centroid of the core, at the first end of the multimode fiber.

According to some embodiments, the multimode fiber is longer than 5 mm, preferably longer than 50 mm, more preferably longer than 100 mm, or most preferably longer than 150 mm.

The length of the multimode fiber may be measured along the fiber, between the first end of the multimode fiber and the second end of the multimode fiber. The length of the multimode fiber may determine how well the light impinging on one end of the multimode fiber gets mixed by the multimode fiber before being emitted by the other end of the multimode fiber. A longer multimode fiber may lead to a signal that is more homogeneous, at least since it may increase the number of internal reflections, causing angular and intensity mixture. An insufficient angular and intensity mixture may lead to that certain directions and area portions contain rays in majority from only one or two VCSELs. The multimode fiber may for example be 120 mm in length. The multimode fiber may be up to, or longer than, 1 m. The fiber length preferably allows for easier assembly in production.

According to some embodiments, the cross-section of the core of the multimode fiber has a diagonal or a diameter that is between 50 µm and 1 mm, preferably between 100 µm and 200 µm, or most preferably 150 µm.

The diagonal or a diameter of the cross-section of the core of the multimode fiber may be measured in a plane perpendicular to the axis of extension of the multimode fiber. A diagonal or a diameter may be the largest distance between two points in the core at the cross-section of the core of the multimode fiber.

A core diagonal or diameter between 50 µm and 1 mm, preferably between 100 µm and 200 µm, or most preferably 150 µm may be advantageous in order to match with typical VCSEL array side length sizes (of e.g. 100 µm or 200 µm), and/or may be preferable to match with the focal length of readily available focal lenses, in order to obtain a desired divergence that matches with the field of view of the receiver. The receiver field of view may have an angular span of 1, 2, 4, or 6 degrees.

According to some embodiments, the surveying instrument comprises a first optical element arranged between the first end of the multimode fiber and the transmitter arrangement to couple light emitting from the transmitter arrangement into the multimode fiber.

The first optical element may, for example, be a lens such as, for example, a GRIN lens, a spherical lens, or a microlens. The first optical element may increase the coupling efficiency between the VCSEL array and the multimode fiber.

It is noted that other embodiments using all possible combinations of features recited in the above-described embodiments may be envisaged. Thus, the present disclosure also relates to all possible combinations of features mentioned herein.

### Brief description of drawings

Exemplifying embodiments will now be described in more detail, with reference to the following appended drawings:
Figure 1 is a schematic illustration of a surveying instrument, in accordance with some embodiments;
Figure 2 is a schematic illustration of a surveying operation using a surveying instrument, in accordance with some embodiments;
Figure 3 is a schematic illustration of a transmitter arrangement, in accordance with some embodiments;
Figures 4a and 4b are schematic illustrations of transmitter arrangements, in accordance with some embodiments;
Figure 5 is a schematic illustration of example cross-sections of the multimode fiber, in accordance with some embodiments;
Figures 6a to 6h are schematic illustrations of the second end of the multimode fiber and a portion of the front lens, in accordance with some embodiments;
Figures 7a to 7d are schematic illustrations of the receiver surface field of view and example cross-sections of light beams, in accordance with some embodiments.

As illustrated in the figures, the sizes of the elements and regions may be exaggerated for illustrative purposes and, thus, are provided to illustrate the general structures of the embodiments. Like reference numerals refer to like elements throughout.

### Detailed description

Exemplifying embodiments will now be described more fully hereinafter with reference to the accompanying drawings in which currently preferred embodiments are shown. The invention may, however, be embodied in many different forms and should not be construed as limited to the embodiments set forth herein; rather, these embodiments are provided for thoroughness and completeness, and fully convey the scope of the invention to the skilled person.

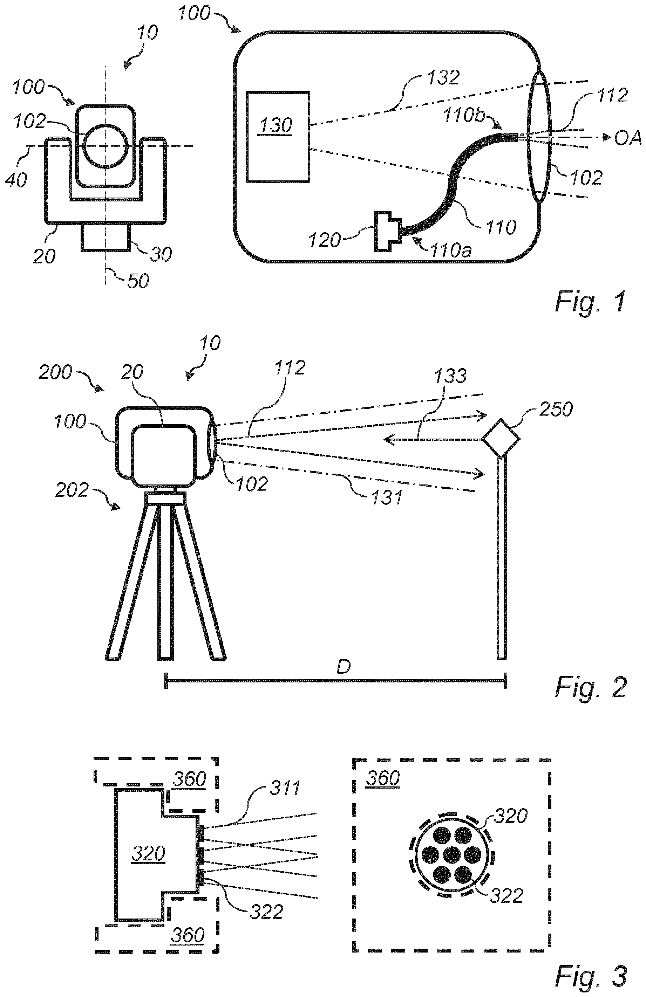

With reference to Figure 1, a surveying instrument 10, in accordance with some embodiments, will be described. The surveying instrument 10 comprises a center unit 100. A front view of the surveying instrument 10 is illustrated on the left in figure 1, and a side view of the center unit 100 is illustrated on the right in figure 1.

The surveying instrument 10 further comprises an alidade 20 and a base 30. The center unit 100 is mounted on the alidade 20 for rotation about a first axis 40. The alidade 20 is mounted on a base 30 for rotation about a second axis 50, intersecting (and in particular orthogonal to) the first axis 40 such that a sighting axis of the surveying instrument is rotatable about a rotation point.

In the following, while reference is made to the centre unit 100 of the surveying instrument 10, reference may more generally be made to the surveying instrument 10.

The center unit 100, or more generally the surveying instrument 10, comprises a front lens 102 having an optical axis OA. The front lens diameter may be between 5 mm and 100 mm, such as for example 10 mm, 20 mm or 50 mm. The focal length of the front lens may be between 30 mm and 200 mm, such as for example 40 mm, 80 mm, 120 mm, or 160 mm. During operation, the center unit 100, or the surveying instrument 10, may be aimed at a scene comprising an object of interest, such as a target 250 illustrated in figure 2. In other words, the optical axis OA of the center unit 100 may, during operation, point towards an object of interest, against which or toward which measurements may be made.

For such measurement, the center unit 100 comprises a transmitter arrangement 120 and a receiver 130. The transmitter arrangement 120 is configured to emit a light beam. More specifically, the transmitter arrangement 120 comprises a vertical cavity surface emitting laser (VCSEL) array configured to emit a light beam.

The receiver 130 is configured to receive light 132. The receiver 130 may, for example, comprise a sensor of an electronic distance measurement unit, a camera, or a sensor configured to determine an angular relation between an optical axis (of the surveying instrument) and the target. The receiver 130 may receive light that has been emitted by the transmitter arrangement 120 and then reflected at a scene. More specifically, the light 132 received by the receiver 130 may comprise at least a portion of the light beam emitted by the VCSEL array, reflected at an object of interest, such as a target 250.

The center unit 100 comprises a multimode fiber 110 comprising a first end 110a and a second end 110b. The multimode fiber 110 also comprises a core. The multimode fiber 110 is arranged along the optical path of the transmitter arrangement 120. The first end 110a of the multimode fiber 110 is configured to receive at least a portion of the light beam emitted by the transmitter arrangement 120. More specifically, the core at the first end 110a of the multimode fiber 110 is configured to receive at least a portion of the light beam emitted by the transmitter arrangement 120. Put another way, the VCSEL array is configured to emit a light beam, such as a light beam 311 of figure 3, towards the first end 110a of the multimode fiber 110. Preferably, the transmitter arrangement 120 is configured to illuminate a major part of the core at the first end 110a of the multimode fiber 110. The VCSEL array and the core of the multimode fiber at the first end 110a of the multimode fiber 110 may be concentrically aligned to, for example, increase the area of the core that is illuminated and thereby increase the coupling efficiency. The shape and/or size of the VCSEL array may be adapted to the shape and/or size of the core of the multimode fiber. Light received by the core of the multimode fiber 110 at the first end 110a propagates along the multimode fiber 110 before it reaches the second end 110b, where it is output. The second end 110b of the multimode fiber 110 is arranged to transmit the light beam 112 towards a scene. The light beam 112 is coincident with the optical axis OA of the front lens 102.

The multimode fiber 110 may be arranged so that the beam 112 intersects an optical element, such as, for example, a lens, before exiting the center unit 100. In figure 1, the multimode fiber 110 is arranged so that the beam 112 output at the second end 110b of the multimode fiber 110 is transmitted through the front lens 102 before exiting the center unit 100. In other embodiments, the beam 112 output at the second end 110b of the multimode fiber 110 may not intersect the front lens 102, or any lens, before exiting the center unit 100.

The beam 112 may be emitted out of the center unit 100 towards a target or an object of interest 250. At least a portion of the beam 112 may be reflected at the target or object of interest 250 back towards the center unit 100 as a part of the received light 132. At least a portion of the light 132 is received by the receiver 130. The light 132 reaches the receiver 130 via an optical path, including the front lens 102. The optical path of the light 132 is separate from the multimode fiber 110. The multimode fiber 110 is preferably arranged so that the receiver 130 receives a minimal amount of spilled light from the first end 110a or the second end 110b of the multimode fiber 110, so that this spilled light does not significantly affect the measurements. At the front lens 102, the optical path of the light 132 is coincident with the optical axis OA of the front lens 102. The optical path of the light 132 is concentric with the optical path of the transmitted beam 112 at the front lens 102.

In order for the second end 110b of the multimode fiber 110 to output a light beam concentric with the light 132 at the front lens 102, the second end 110b of the multimode fiber 110 may block a portion of the light 132 from reaching the receiver 130. Preferably, the transmitter arrangement 120 and the multimode fiber 110 are arranged to minimize, or at least reduce, the blockage of the optical path of the light 132. To minimize or reduce blockage, the second end 110b of the multimode fiber 110 may preferably be positioned close to the front lens 102. The multimode fiber 110 may be bent so as to minimise the blockage on the receiver 130. The multimode fiber 110 may be bent away from the path of the light 132. The multimode fiber 110 may be bent where a focus cone area of the receiver beam 132 is larger, preferably much larger, than the area of the multimode fiber 110. The bending of the multimode fiber 110 may be located in the first 50%, or first 75%, of the distance between the front lens 102 and the receiver 130, measured from the front lens 102. The transmitter arrangement 120 of figure 1 is positioned outside of the optical path of the light 132.

Figure 2 illustrates an example surveying operation 200 comprising a surveying instrument 10 and a target 250. The surveying instrument 10 comprises a center unit 100 and an alidade 20. The surveying instrument 10 could, for example, be used for tracking of the target 250. The surveying instrument 10, and the components of the surveying instrument 10, may be the same or substantially similar in its overall construction to the elements with the corresponding reference numeral shown in figure 1. Reference numerals corresponding to those used in figure 1 may indicate elements that are the same or substantially similar to those shown in figure 1. Accordingly, these repeated elements may not be discussed again in detail.

In figure 2, the surveying instrument 10 is arranged on a tripod 202, which may form a part of the base of the surveying instrument 10. Alternatively, the surveying instrument 10 may be handheld, arranged on a vehicle or arranged on another structure. As mentioned above, during operation, the surveying instrument 10 is aimed at an object or surface of interest, such as a surveying target, surveying pole, or, in short, a target, 250. The object of interest may also, for example, be a surface of, e.g., a natural structure or a building.

The surveying instrument 10, or more specifically a transmitter of the surveying instrument 10, may illuminate the scene using the beam 112. The surveying instrument 10 may analyse light reflected at a scene that is impinging on the surveying instrument 10, or more specifically a receiver of the surveying instrument 10, to detect structures in the scene. This may allow detections in the field of view 131 of the surveying instrument 10 of, for example, a surface or an area, e.g. where landslide starts, or one of several placed targets, e.g. corner cube prisms, reflective tapes, or white non-specular reflecting targets.

As mentioned above, a receiver, such as the receiver 130 of the center unit 100 may, for example, be a sensor of a distance measurement unit, a camera, or a sensor configured to determine an angular relation between an optical axis and the direction to the target. If a receiver of the center unit 100 is, for example, a sensor of a distance measurement unit (EDM), the distance D from the surveying instrument 10 to the target 250 may be determined. If the surveying instrument 10 is placed at a known position, for example in a local or global reference frame, the surveying instrument 10 may be used to determine a position of the target 250. Specifically, by knowing the position and the orientation of the center unit 100, as well as the measured distance D, the point at which the light beam 112 is reflected may be accurately positioned.

In figure 2, the target 250 is mounted on a rod. During operation, an operator may position the rod at one or more points of interests. A tracker of the surveying instrument 10 may determine angles, using for example a sensor configured to determine an angular relation between an optical axis and the target, as seen from the sensor. The tracker may guide a motor, or an operator, to aim the surveying instrument 10 towards the target 250. An electronic distance measurement unit of the surveying instrument 10 may determine distances. A target tracker may have a field of view that is, e.g., 5, 10, or 100 times, larger than a field of view of a distance measuring unit. A distance D may be measured when the field of view of an electronic distance measurement unit, of the surveying instrument 10, includes the target 250. Having the target 250 within the field of view of a distance meter of the surveying instrument 10 may allow the surveying instrument 10 to measure distances from the surveying instrument 10 to the point(s) of interest, or to accurately measure or determine positions of the point(s) of interest. In another example, the target 250 may be mounted on a vehicle (not depicted). The surveying instrument 10 may be aimed at, e.g., a work site, and may track a position of the vehicle within the worksite based on tracking the position of the target 250.

The target 250 may comprise a corner cube prism. Upon striking a corner cube prism, an incoming light ray, such as a light ray of the transmitted beam 112, is retroreflected back in the exact direction from which it originated. This property of corner cube prisms enhances the optical power of the reflected light signal, which may enable more precise measurements at longer distances compared to direct-reflection targets such as natural surfaces.

The surveying instrument 10 transmits a light beam 112 towards a target 250. The surveying instrument 10 has a field of view 131. The field of view 131 refers to the extent of the observable world seen by the surveying instrument 10, or more specifically, a receiver of the surveying instrument 10. In other words, a receiver of the surveying instrument 10, such as receiver 130 of figure 1, may receive light, such as the light 132 of figure 1, from sources located within the field of view 131. Retroreflected light 133 is light originating at the surveying instrument 10 that has been retroreflected, by a target 250, back towards the surveying instrument 10. Retroreflected light 133 may be received by the surveying instrument 10. The surveying instrument 10, or more specifically a receiver of the center unit 100, may receive light from within the field of view 131, comprising at least a portion of a light beam 112 transmitted by the center unit 100, that has been retroreflected back as retroreflected light 133 by the target 250 towards the center unit 100.

The divergence of the transmitter beam 112 may match, be slightly smaller than, or be slightly larger than, the angle of the field of view 131 of the surveying instrument 10, or more specifically a receiver of the surveying instrument 10. A slightly larger divergence may increase tolerances for alignment errors. A slightly smaller divergence may allow for a higher density in a portion of a receiver field of view, which may lead to an increased measurement range of the surveying instrument.

The light beam 112 propagates along an output light path, i.e., the path of the light output by the surveying instrument 10. The received light, e.g. the received light 132 of figure 1, propagates along a received light path, i.e., the path of the light returned to the surveying instrument 10.

Figure 3 illustrates a cross-section of a side view and a front view of a transmitter arrangement 320 and a transmitter holder, or holder, 360. The cross-section of the side view is illustrated to the left in figure 3 and the front view is shown to the right in figure 3. Reference numerals corresponding to those used in figure 1 or figure 2, but increased by 200, may indicate elements that are the same or substantially similar to those shown in figure 1 or figure 2. Accordingly, these repeated elements may not be discussed again in detail.

The transmitter arrangement 320 comprises several VCSELs 322 arranged in an array. In the front view, seven VCSELs 322 are illustrated. However, it is to be understood that this is for reference only and any plurality of VCSELs 322 may be used. The side view illustrates the VCSELs 322 transmitting light and forming a light beam 311. The transmitter arrangement 320 emits a light beam 311 via the VCSELs 322. The VCSELs 322 are illustrated as being arranged in a grid pattern, forming a circular-shaped array. The VCSELs 322 may be arranged in another manner, such as in a square-shaped array.

A surveying instrument, such as, for example, the surveying instrument 200 of figures 1 and 2, may comprise a holder 360 for holding the transmitter arrangement 320. The holder 360 may be attached to a component of the surveying instrument, such as, for example, one or more of the walls of the surveying instrument or the first end of the multimode fiber, for holding the transmitter arrangement 320 in a substantially fixed position in relation to at least said component of the surveying instrument. If, for example, the holder 360 is attached to the first end of the multimode fiber, at least a portion of the multimode fiber may be attached to one or more walls of the surveying instrument for holding it in a substantially fixed position in relation to the surveying instrument.

The holder 360 may be configured to connect, or hold the relative positions of, the VCSEL array and the first end of the multimode fiber. The holder 360 may be, for example, a sleeve, a fiber ferrule, or another object suitable for interconnecting the VCSEL array and the first end of the multimode fiber. The holder 360 may be configured to block stray light that may interfere with components of the surveying instrument, such as the receiver. Stray light here may comprise light from the VCSEL that would not have entered the core of the multimode fiber, or light traveling out of the first end of the multimode fiber.

The holder 360 is preferably arranged so as to allow the transmitter arrangement 320 to be detachable from the surveying instrument, thereby providing a so called "plug and play" functionality, wherein the transmitter arrangement 320 may be relatively easily removed and reattached to the holder 360. For example, the transmitter arrangement 320 may be detachable by sliding it out of the holder 360. As shown in the side view of figure 3, the transmitter arrangement 320 may, for example, be detached by moving the transmitter arrangement 320 left in relation to the holder 360. More generally, the transmitter arrangement 320 may be detachably arranged to the holder 360 in any way that allows for "plug and play" functionality.

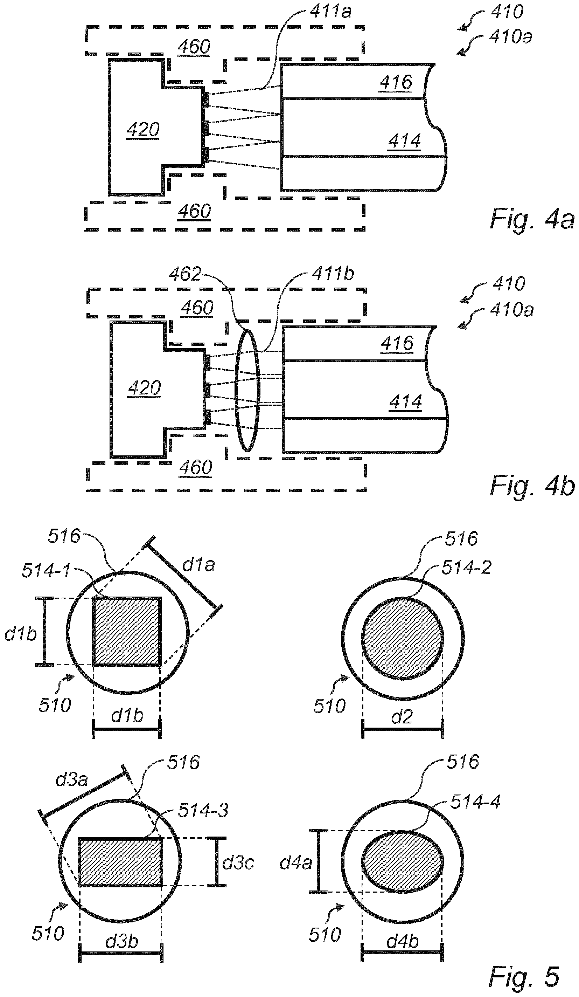

Figure 4a and figure 4b each illustrates a cross-section of a side view of a transmitter arrangement 420 and a transmitter holder, or holder, 460. In figures 4a and 4b, reference numerals corresponding to those used in figure 1, figure 2 or figure 3, but increased by 300, 200, or 100, respectively, may indicate elements that are the same or substantially similar to those shown in figure 1, figure 2 or figure 3. Accordingly, these repeated elements may not be discussed again in detail.

The holder 460, illustrated in figures 4a and 4b, is configured to hold the multimode fiber 410. More specifically, the holder 460 is configured to hold the first end 410a of the multimode fiber 410. The multimode fiber 410 comprises a multimode fiber core, or core, 414 and an outer layer 416. The outer layer 416 may comprise a coating. In figures 4a and 4b, the first end 410a of the multimode fiber core 410 is illustrated as having a flat end face. In other embodiments, the first end of the multimode fiber 410a may have another shape of the end face, for example an at least partially curved end face.

When in a mounted position, the holder 460 may be arranged to keep the transmitter arrangement 420 and the first end 410a of the multimode fiber 410 in a substantially stationary position in relation to each other. More specifically, when in a mounted position, the holder 460 may be arranged to keep the VCSEL array of the transmitter arrangement 420 and the core 414 of the first end 410a of the multimode fiber 410 in a substantially stationary position in relation to each other. Preferably, when in a mounted position, the holder 460 may be arranged to hold the VCSEL array of the transmitter arrangement 420 concentric with respect to the core 414. Figure 4a illustrates the transmitter arrangement 420 emitting a beam 411a which is directly coupled with the core of the multimode fiber 410. Figure 4b illustrates the transmitter arrangement 420 emitting a beam 411b entering the optical fiber through a first optical element 462. Concentrically arranging the VCSEL array and the core 414 may comprise aligning the VCSEL array so that the beam 411a, 411b is concentrically aligned with the core 414.

The holder 460 may be arranged to hold the transmitter arrangement 420 so that the transmitter arrangement 420 is close to the first end 410a of the multimode fiber 410. The transmitter arrangement 420 may abut the first end 410a of the multimode fiber 410. Figure 4b illustrates how a first optical element 462 may be optically positioned between the transmitter arrangement 420 and the first end 410a of the multimode fiber 410. The first optical element 462 may, for example, be a lens such as a GRIN lens, a spherical lens, or a microlens. The first optical element 462 may alter the optical characteristics of the beam 411. The first optical element 462 may be configured to increase the coupling efficiency between the transmitter arrangement 420 and the first end 410a of the multimode fiber 410. More specifically, the first optical element 462 may be configured to increase the coupling efficiency between the VCSEL array and the core 414. The transmitter arrangement 420 may abut the first optical element 462. The first optical element 462 may abut the first end 410a of the multimode fiber 410. The optional optical element 462 may be a part of, or attached to, the fiber 410, the transmitter arrangement 420, or the holder 460.

Figure 5 illustrates multiple examples for the cross-section of the multimode fiber 510. The multimode fibres 510 of figure 5 may be the same or substantially similar to the multimode fiber 110 of figure 1, or the multimode fiber 410 of figure 4a and figure 4b. Accordingly, this repeated element may not be discussed again in detail. The cross-sections shown in figure 5 illustrate different shapes of the core 514-1, 514-2, 514-3, 514-4 of the multimode fiber 510.

The top left multimode fiber 510 of figure 5 illustrates a cross-section of the core 514-1 comprising a substantially square shape. The square-shaped fiber core 514-1 comprises two sides, each with a length d1b, and a diagonal of length d1a. The top right multimode fiber 510 of figure 5 illustrates a cross-section wherein the fiber core 514-2 comprises a substantially circular shape. The circular fiber core 514-2 has a diameter of length d2. The bottom left multimode fiber 510 of figure 5 illustrates a cross-section of the core 514-3 comprising a substantially rectangular shape. The rectangular-shaped fiber core 514-3 comprises a first side of length d3b, a second side of length d3c, and a diagonal of length d3a. The bottom right multimode fiber 510 of figure 5 illustrates a cross-section of the core 514-4 comprising a substantially elliptical shape. The elliptical-shaped fiber core 514-4 comprises a first diameter of length d4a and a second diameter of length d4b.

In figure 5, the outer layer 516 of each of the multimode fibres is circular. It is to be understood that the outer layer 516 of the multimode fiber may have any suitable shape.

The multimode fiber may have the same cross-sectional shape of the respective core 514-1, 514-2, 514-3, 514-4 along the entire length of the multimode fiber, or the cross-section of the core 514-1, 514-2, 514-3, 514-4 may vary along the length of the multimode fiber. The shape of the core 514-1, 514-2, 514-3, 514-4 at the first end of the multimode fiber 510 may be adapted to increase the coupling efficiency between a transmitter arrangement and the multimode fiber 510. The shape of the cross-section of the core 514-1, 514-2, 514-3, 514-4 at the first end of the multimode fiber 510 may determine the requirement for rotational alignment when mounting a transmitter arrangement in relation to the first end of the multimode fiber 510. The shape of the cross section of the core 514-1, 514-2, 514-3, 514-4 may be tailored to match the illumination of the scene 112 with the field of view of the receiver 130. Adapting the shape of the cross-section of the core 514-1, 514-2, 514-3, 514-4 at the second end of the multimode fiber 510, may increase the coupling efficiency between the multimode fiber 510 and the receiver. The shape of the cross-section of the core 514-1, 514-2, 514-3, 514-4 at the second end of the multimode fiber 510 may be adapted to the shape of the surface of a receiver, such as the receiver 130 illustrated in figure 1.

Adapting the shape of the core 514-1, 514-2, 514-3, 514-4 to the shape of the surface of the receiver may be done by having the shape of the cross-section of the core 514-1, 514-2, 514-3, 514-4 significantly correspond to a shape of the surface of the receiver. For example, a square-shaped illumination angular area of the multimode fiber 510, i.e. the angular region over which the second end of the multimode fiber 510 distributes its illumination, may substantially match e.g. a square-shaped angular area of the receiver (or camera sensor), and a rectangularly or elliptically shaped illumination angular area of the multimode fiber 510 may substantially match e.g. a rectangularly or elliptically shaped angular area of the receiver or camera sensor.

The diagonal(s) or diameter(s) of the cross-section of the cores 514-1, 514-2, 514-3, 514-4 may be between 50 µm and 1 mm, preferably between 100 µm and 200 µm, or most preferably 150 µm.

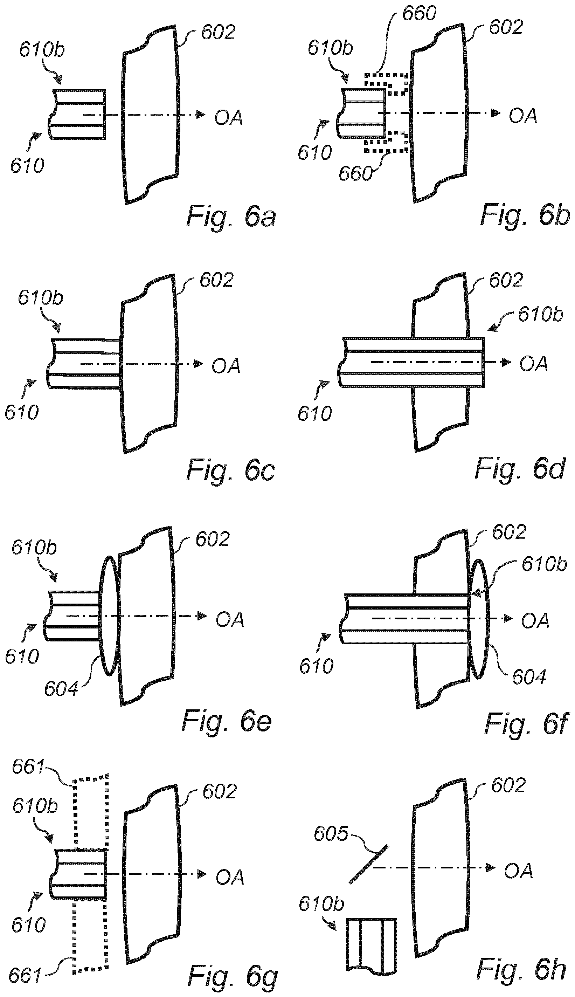

Figures 6a-h illustrate different side views of the second end 610b of the multimode fiber 610 and a portion of the front lens 602 in accordance with an embodiment. In Figures 6a-h, reference numerals corresponding to those used in figures 1-5, but increased by 500, 400, 300, 200, or 100, may indicate elements that are the same or substantially similar to those shown in figures 1-5. Accordingly, the details regarding these elements are not repeated again here.

As mentioned above, the second end 610b of the multimode fiber 610 may preferably be positioned close to the front lens 602. This may be done in several ways. Figure 6a illustrates a second end 610b of the multimode fiber 610 arranged close to the front lens 602. Figure 6b illustrates a second end 610b of the multimode fiber 610 that is coupled to the front lens 602 via a holder 660. The holder 660 may, for example, be attached to the front lens via glue or tape. The holder 660 may be an object suitable for coupling the second end 610b to the front lens 602, such as, for example, a sleeve or a fiber ferrule. The holder 660 may be configured to block stray light from interfering with other components of the surveying instrument, such as the receiver.

Figure 6c illustrates an embodiment with a second end 610b of the multimode fiber 610 abutting the front lens 602. The second end 610b of figure 6c may be held against or attached to the front lens 602. The second end 610b may be attached to the front lens 602 by, for example, glue or tape. Figure 6d illustrates the second end 610b of the multimode fiber 610 positioned through the front lens 602. A second end 610b positioned through the front lens 602 may be attached to the front lens 602 via, for example, attaching the sides of the multimode fiber 610 to the front lens 602.

Figures 6e and 6f illustrate embodiments with the second end 610b of the multimode fiber 610 arranged to transmit the beam through a second optical element 604. The second optical element 604 may alter the optical properties of the transmitted beam. The second optical element 604 may comprise a lens, such as, for example, a GRIN lens, a spherical lens, or a microlens.

Figure 6e illustrates the second end 610b arranged to transmit the beam through the second optical element 604 and the front lens 602. Figure 6f illustrates the second end 610b arranged to transmit the beam in an optical path that may exclude the front lens 602. The second end 610b of figures 6e or 6f may be configured to abut, be in contact with, or be arranged close to the second optical element 604. The second end 610b of figures 6e or 6f may be attached to the second optical element 604, via, for example, glue, tape, or a holder. The second optical element 604 may abut, be in contact with, or be arranged close to the front lens 602. The second optical element 604 may be attached to the front lens 602 via, for example, glue, tape, or via a holder.

Figure 6g illustrates an embodiment with a second end 610b of the multimode fiber 610 that is coupled to the front lens 602 via a holder 661. The holder 661 may have features and functionality similar to the holder 360 of figure 3, the holders 460 of figures 4a and 4b, and/or the holder 660 of figure 6b. The holder 661 is decoupled from, i.e. not attached to, the front lens 602. In other words, the holder 661 is not in engagement with the front lens 602. The holder 661 may be coupled, or attached to, a structure, or a component, of the surveying instrument (or centre unit thereof) in which the multimode fibre is installed. The holder 661 may comprise one, two, three, four, or more arms. Arms of the holder 661 may be arranged symmetrically around the coaxial setup, i.e. arranged symmetrically around the second end 610b or the optical axis OA. Arms of the holder 661 are preferably thin so as to reduce, or even minimise, the blockage of the arms on the returned signal, i.e. to reduce the amount of light that is blocked from reaching a receiver, such as the receiver 130 of figure 1. Preferably, a blocking area of an arm or arms of the holder 661 is substantially smaller than the area of the front lens 602.

Figure 6h illustrates an embodiment with the second end 610b of the multimode fiber 610 being positioned close to the front lens 602, while being arranged so as to transmit a light beam towards a mirror 605. The mirror 605 is positioned to reflect a light beam, propagating from the second end 610b, through the front lens 602. A resulting transmitted beam, i.e. a beam propagating from the second end 610b that is reflected by the mirror 605 through the front lens 602, may be coincident with the optical axis OA at the front lens 602. The mirror 605 is arranged so as to direct the light in an orthogonal turn, i.e. about 90 degrees. The mirror 605 may be arranged to direct the light propagating from the second end 610b at any angle. The mirror 605 may be arranged in a holder. The second end 610b of figure 6h of the multimode fiber may be arranged in a holder. The second end 610b is preferably arranged so as to minimize the obstruction in, or not obstructing at all, the optical path of a receiver. In the example shown in Figure 6h, the portion of the multimode fibre located closest to the front lens 602 extends in a direction intersecting the optical axis OA and an optical element, such as for example a mirror 605, is provided in the optical path for redirecting the light exiting the multimode fibre in a direction parallel to the optical axis OA. The mirror 605 may be configured, e.g., by having a curved or flat shape, to adapt the divergence of the transmitted beam. In combination with the mirror 605, an additional optical element, such as a GRIN lens, a spherical lens, a microlens, or a mirror, may be arranged in the optical path of the light exiting the multimode fiber for adapting the divergence of the transmitted beam.

More generally, in embodiments in which the multimode fibre is arranged such that the light exiting the multimode fibre does not propagate along the optical axis OA (or a direction parallel to it), an optical element is provided for redirecting the light along the optical axis OA.

In Figures 6a-h, the second end 610b of the multimode fiber 610 is arranged at the front lens 602 for transmitting a beam coincident with the optical axis OA of the front lens 602. Coincident may comprise that the transmitted beam is coaxial, collinear and/or concentric with the optical axis OA at the front lens 602.

In Figures 6a-h, the second end 610b of the multimode fiber core 610 is illustrated as having a flat end. It is to be understood that the second end 610b of the multimode fiber 610 may have another shape of the end face, such as a curved end face.

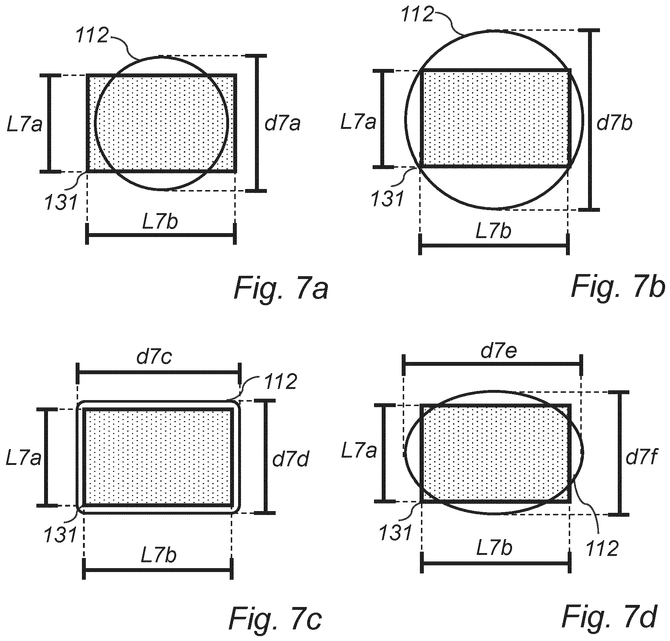

Figures 7a-d illustrate a receiver surface field of view 131 and a light beam 112, or more specifically the illumination field angle of the light beam 112 transmitted by a surveying instrument, such as the surveying instrument 10 of figure 1. The illumination field angle 112 refers to the angular extent of the area illuminated by a transmitter arrangement, such as one including a VCSEL array. The field of view 131 of Figures 7a-d may be similar to the field of view 131 of figure 2. The light beam 112 of Figures 7a-d may be similar to the light beam 112 of figure 1 and/or 2. Accordingly, the details regarding these elements are not repeated again here.

The properties of a multimode fiber, and/or one or more lenses positioned at the second end of the multimode fiber, may be selected to adapt the shape of the light beam 112. The divergence of the transmitted light beam 112 may preferably be adapted for covering at least a major part of the field of view 131 of the receiver to improve the accuracy and/or reliability of the measurement.

The receiver surface field of view 131 is illustrated in Figures 7a-d as being rectangular, with a shorter side L7a and a longer side L7b. The receiver surface field of view 131 may have a shape other than rectangular. Figures 7a and 7b illustrate a circular light beam 112. The circular light beam 112 of figure 7a is illustrated as having a diameter d7a that is larger than the shorter side L7a and smaller than the longer side L7b. The circular light beam 112 of figure 7b is illustrated as having a diameter d7b that is larger than the shorter side L7a and larger than the longer side L7b.

Figure 7c illustrates a variant with a substantially rectangular light beam 112, with a shorter side d7d and a longer side d7c. The shape of the light beam 112 is illustrated as a rounded rectangle due to the nature of how light may be emitted and propagated. The shape of the light beam 112 of figure 7c is substantially similar to the shape of the receiver surface field of view 131. The shorter side d7d of the rectangular light beam 112 is slightly longer than the shorter side L7a. The longer side d7c of the rectangular light beam 112 is slightly longer than the longer side L7b. The light beam 112 of figure 7c covers the receiver surface field of view 131.

Figure 7d illustrates a variant with an elliptical light beam 112, with a shorter diameter d7f and a longer diameter d7e. The shorter diameter d7f is slightly longer than the shorter side L7a, and slightly shorter than the longer side L7b. The longer diameter d7e is longer than the shorter side L7a, and slightly longer than the longer side L7b.

The relationship between the size of the receiver surface field of view 131 and the size of the light beam 112 may be different from what is illustrated in figures 7a-7d. It is to be understood that a length of a side of the receiver surface field of view 131 and a dimension (e.g. the diameter or length) of the light beam 112 may be substantially similar.

In figure 7a and figure 7d, the receiver surface field of view 131 is not fully utilised, as some parts of the receiver surface field of view 131 is not impinged on by the light beam 112. In Figures 7a-d, the light beam 112 is not fully utilised, as some parts of the light beam are not impinging on the receiver surface field of view 131. Preferably, a larger part of the receiver surface field of view 131 is utilised and/or a large part of the light beam 112 is utilised. Utilising a large part of the receiver surface field of view 131 and/or a large part of the light beam 112 may increase energy efficiency of the system and/or it may allow targets in the scene, or more specifically a target that is within the field of view of the receiver 131, to be located even if the optical axis of a surveying system is not directly oriented towards a target.

The shape of the light beam 112 illustrated in Figures 7a-d may, at least in part, depend on the shape of a multimode fiber that may transmit the light beam 112. For example, the circular and elliptical light beams illustrated in figures 7a, 7b, and 7d may be transmitted by a multimode fiber with a circular or elliptical core, such as the top right and bottom right multimode fibres illustrated in figure 5. As another example, the substantially rectangular light beam illustrated in figure 7c may be transmitted by a multimode fiber with a square or rectangular core, such as the top left and bottom left multimode fibres illustrated in figure 5.

The person skilled in the art realizes that the present invention by no means is limited to the preferred embodiments described above. On the contrary, many modifications and variations are possible within the scope of the appended claims.

Although features and elements are described above in particular combinations, each feature or element can be used alone without the other features and elements or in various combinations with or without other features and elements.

Additionally, variations to the disclosed embodiments can be understood and effected by the skilled person in practicing the claimed invention, from a study of the drawings, the disclosure, and the appended claims. In the claims, the word "comprising" does not exclude other elements, and the indefinite article "a" or "an" does not exclude a plurality. The mere fact that certain features are recited in mutually different dependent claims does not indicate that a combination of these features cannot be used to advantage.

## Claims

1. A surveying instrument (10) for surveying a scene (200) including a target (250), said surveying instrument comprising:
a front lens (102) comprising an optical axis (OA),
a multimode fiber (110) comprising a core (414),
a transmitter arrangement (120) comprising a two dimensional array of vertical cavity surface emitting lasers (VCSELs), wherein a first end (110a) of the multimode fiber is arranged to receive at least a portion of a light beam emitted by the transmitter arrangement for illuminating a major part of the core of the multimode fiber and wherein a second end (110b) of the multimode fiber is arranged at the front lens for transmitting a beam (112) coincident with the optical axis towards the scene including said target, and
a receiver (130) configured to receive light reflected at the target via an optical path separate from the multimode fiber, wherein the optical path includes the front lens, and the optical path coincides with the optical axis at the front lens.

2. The surveying instrument according to claim 1, wherein the VCSEL array comprises at least ten VCSELs (322), or preferably at least fifty VCSELs.

3. The surveying instrument according to claim 1 or 2, wherein the multimode fiber is detachably arranged at the VCSEL array, or the multimode fiber is detachably arranged at the front lens.

4. The surveying instrument according to any preceding claim, wherein the second end of the multimode fiber is arranged at a first side or a second side of the front lens, wherein the first side and the second side of the front lens are arranged along the optical axis, and the first side is arranged prior to the second side along the propagation direction of the transmitted beam.

5. The surveying instrument according to claim 4, wherein the second end of the multimode fiber is attached to the front lens, wherein the second end of the multimode fiber abuts the front lens, or wherein the second end of the multimode fiber is held in proximity to the front lens.

6. The surveying instrument according to any preceding claim, comprising a second optical element (604, 605), wherein the second end of the multimode fiber is arranged for transmitting the beam through the second optical element.

7. The surveying instrument according to claim 5 or 6, wherein the second optical element is a GRIN lens, a spherical lens, a microlens, or a mirror.

8. The surveying instrument according to any preceding claim, wherein the divergence of the transmitted beam is adapted for covering at least a major part of the field of view of the receiver.

9. The surveying instrument according to any preceding claim, wherein the cross-section of the core of the multimode fiber is circular, elliptical, square, or rectangular.

10. The surveying instrument according to any preceding claim, wherein the size of the VCSEL array is adapted to the size of the cross-section of the core of the multimode fiber for illumination of the major part of the core of the multimode fiber.

11. The surveying instrument according to any preceding claim, wherein the receiver is a sensor of an electronic distance measurement unit, a camera, or a sensor configured to detect an angular deviation of received light reflected at the target relative to the optical axis, of the surveying instrument.

12. The surveying instrument according to any preceding claim, wherein the VCSEL array and the first end of the multimode fiber are arranged with a shared center or axis.

13. The surveying instrument according to any preceding claim, wherein the multimode fiber is longer than 5 mm, preferably longer than 50 mm, more preferably longer than 100 mm, or most preferably longer than 150 mm.

14. The surveying instrument according to any preceding claim, wherein the cross-section of the core of the multimode fiber has a diagonal or a diameter that is between 50 µm and 1 mm, preferably between 100 µm and 200 µm, or most preferably 150 µm.

15. The surveying instrument according to any preceding claim, comprising a first optical element (462) arranged between the first end of the multimode fiber and the transmitter arrangement to couple light emitting from the transmitter arrangement into the multimode fiber.
